# EUROPEAN PATENT SPECIFICATION

(11) **EP 3 551 451 B1**
(45) Date of publication and mention of the grant of the patent: **07.07.2021**
(21) Application number: 17809162.5
(22) Date of filing: 28.11.2017
(51) Int. Cl.: B32B 27/08, B32B 27/32

(54) **MULTILAYER FILMS AND METHODS OF MAKING THE SAME**
MEHRSCHICHTIGE FOLIEN UND VERFAHREN ZUR HERSTELLUNG DAVON
FILMS MULTICOUCHES ET LEURS PROCÉDÉS DE FABRICATION

(30) Priority: 06.12.2016 US 201662430638 P; 26.01.2017 EP 17153169
(43) Date of publication of application: 16.10.2019
(73) Proprietor: ExxonMobil Chemical Patents Inc., Baytown, TX 77520 (US)
(72) Inventor: ZHU, Zhen-Yu, Shanghai 201208 (CN); WANG, Xiao-Chuan, Shanghai 200135 (CN); OHLSSON, Stefan, B., 3140 Keerbergen (BE); VAN LOON, Achiel, Jos, 2900 Schoten/Antwerp (BE); ZHANG, Xin, Yue, Shanghai 200240 (CN); MARTIN-GATUIS, Michael, Neder Over Heembeek, 1120 Brussel (BE)
(74) Representative: ExxonMobil Chemical Europe Inc.
(86) International application number: PCT/US2017/063488
(87) International publication number: WO 2018/106480

(56) References cited:
- WO-A1-2015/157876
- WO-A1-2016/145550
- US-A1- 2011 252 745
- US-A1- 2012 100 356
- US-A1- 2014 127 489
- US-A1- 2016 060 425

## Description

### FIELD OF THE INVENTION

This invention relates to films, and in particular, to multilayer films comprising polyethylene, methods for making such films, and heavy duty sacks made therefrom.

### BACKGROUND OF THE INVENTION

Coextruded blown films are widely used in a variety of packaging as well as other applications. Film properties are often subject to the combined effect of the coextrusion process conditions and polymer compositions selected for the different layers. In order to address requirements of particular end-uses, film producers have to accordingly highlight certain film properties while balancing different mechanical properties repulsive to each other, such as stiffness and toughness, to make stronger films for a given thickness.

Heavy duty sacks are known for bagging bulk products, typically lawn-and-garden products, consumer goods, chemicals, etc. Conventional sacks for such packaging applications generally include coextruded films with a three-layer structure made with a majority component of ethylene polymers, e.g. metallocene catalyzed polyethylenes (mPEs), linear low density polyethylenes (LLDPEs), linear medium density polyethylenes (MDPEs), or linear high density polyethylenes (HDPEs), and low density polyethylenes (LDPEs). Good machinability (i.e., bag filling and palletization operation) requires the film to have a certain minimum stiffness. The minimum stiffness in turn requires the overall density (crystallinity) be increased in order to downgauge the film thickness. However, the increased density often causes poor impact properties, such as edge fold impact strength and seal rupture when a bag is dropped. The weakest area of the film tends to be adjacent to the seal area where the film is thinner as a result of the stresses the film is exposed to during the sealing operation. This thinning phenomenon is typical for the linear types of polyethylene (PE) that are required for short sealing time and high hot tack seal strength. Previous attempts in the art mostly focus on point-by-point improvements on the current three-layer structure, thus balance between stiffness-related and toughness-related properties, flexibility in modification, and further potential of down-gauging all continue to be restricted by varying film formulation with the available selection of ethylene polymers. It is viewed as a heavy duty sack applications to develop a convenient and flexible approach to enable selective improvement on a certain set of properties preferred by end-use while maintaining a well-balanced overall film performance without significantly increasing polyethylene consumption under cost pressure.

WO 2016/088045 provides multilayer films with an improved balance of tear properties comprising polyethylene containing a filler or nucleating agent.

WO 2016/027193 discloses a polyethylene polymer composition suitable for use in the manufacture of packaging articles, flexible films and/or sheets. In one embodiment, the copolymer comprises a polyethylene resin with density 0.918 g/cm³ to about 0.935 g/cm³, G' at G"_{(500 Pa)} value, as determined from Dynamic Mechanical Analysis at 190°C, of less than 40 Pa, M_{z}/M_{w} of greater than 2, CDBI₅₀ of greater than 60.

U.S. Patent Publication No. 2012/0100356 relates to a multi-layer blown film with improved strength or toughness comprising a layer comprising a metallocene polyethylene (mPE) having a high melt index ratio (MIR), a layer comprising an mPE having a low MIR, and a layer comprising a HDPE, and/or LDPE. Other embodiments have skin layers and a plurality of sub-layers. At least one sub-layer includes an mPE, and at least one additional sub-layer includes HDPE and/or LDPE. The mPE has a density from about 0.910 to about 0.945 g/cm³, MI from about 0.1 to about 15 g/10 min, and melt index ratio (MIR) from about 15 to 25 (low-MIR mPE) and/or from greater than 25 to about 80 (high-MIR mPE). The process is related to supplying respective melt streams for coextrusion at a multi-layer die to form a blown film having the inner and outer skin layers and a plurality of sub-layers, wherein the skin layers and at least one of the sub-layers comprise mPE and at least one of the sub-layers comprise HDPE, LDPE or both.

WO 2006/091310 discloses a multi-layer film and packaging, including heavy duty sacks made therefrom having improved properties that permit processing on high speed bagging/Form Fill-Seal equipment. The multi-layer films of this patent application include an mLLDPE-containing skin layer and a core layer that includes both HDPE and mLLDPE.

U.S. Patent No. 6,956,088 relates to films that exhibit an improved balance of physical properties, and a metallocene catalyzed polyethylene used to make the films that are easier to process than previous metallocene catalyst produced polyolefins and/or polyethylenes. The films are produced with polyethylenes having a relatively broad composition distribution (CD) and a relatively broad molecular weight distribution (MWD).

WO 2015/157876 discloses a multilayer film, comprising two outer layers and a core layer between the two outer layers, wherein each of the two outer layers and the core layer comprises a first polyethylene derived from ethylene and one or more C3 to C20 α-olefin comonomers, wherein the first polyethylene is a metallocene polyethylene (mPE) having a density of about 0.910 to about 0.940 g/cm³, a melt index (MI), I_{2.16}, of about 0.1 to about 15, a molecular weight distribution (MWD) of about 1.5 to about 5.5, and a melt index ratio (MIR), I_{21.6}/I_{2.16}, of about 10 to about 25; wherein the multilayer film has at least one of the following properties: (i) a non-breakage rate (EMC method) of about 60% to about 100% when laminated to a polyester substrate film; and (ii) a non-breakage rate (EMC method) of about 60% to about 100% when laminated to a polyethylene substrate film.

That said, there remains an industry wide need for films and heavy duty packaging made therefrom with a more balanced property profile that can deliver advantages over the current three-layer structure technology for enabling more efficient processing to form heavy duty sacks. Especially, films and heavy duty sacks having greater machine direction tear strength, greater creep resistance (at the same gauge) while still having superior dart drop and sealing performance are desirable, preferably with gauge reduction. Applicant has found that such objective can be achieved by a film structure of at least five layers as long as certain compositions in different layers are met. While the polyethylenes used remain unchanged compared to the conventional three-layer structure, such increase in the number of layers can facilitate selective improvement on desired properties and fine-tuning of property profile by conveniently adjusting composition in specific layers, particularly modifying composition and position of the most "stiff" layer, i.e. the one containing the polyethylene having the highest density of all polyethylenes in the film. In step with the above is an improved balance between repulsive mechanical properties, e.g. stiffness-related and toughness-related properties, which results in enhanced overall film performance allowing for a gauge reduction of at least about 8%, depending on specific property profile. Therefore, the inventive film offers a promising alternative to the conventional three-layer coextruded blown film for heavy duty packaging industry.

### SUMMARY OF THE INVENTION

The present invention relates to heavy duty sacks comprising multilayer films, as defined in the attached claims.

In another embodiment, the present invention relates to a method for making a multilayer film, as described in the attached claims.

[Deleted]

### DETAILED DESCRIPTION OF THE PRESENT INVENTION

Various specific embodiments, versions of the present invention will now be described, including preferred embodiments and definitions that are adopted herein. While the following detailed description gives specific preferred embodiments, those skilled in the art will appreciate that these embodiments are exemplary only, and that the present invention can be practiced in other ways. Any reference to the "invention" may refer to one or more, but not necessarily all, of the present inventions defined by the claims. The use of headings is for purposes of convenience only and does not limit the scope of the present invention.

As used herein, a "polymer" may be used to refer to homopolymers, copolymers, interpolymers, terpolymers, etc. A "polymer" has two or more of the same or different monomer units. A "homopolymer" is a polymer having monomer units that are the same. A "copolymer" is a polymer having two or more monomer units that are different from each other. A "terpolymer" is a polymer having three monomer units that are different from each other. The term "different" as used to refer to monomer units indicates that the monomer units differ from each other by at least one atom or are different isomerically. Accordingly, the definition of copolymer, as used herein, includes terpolymers and the like. Likewise, the definition of polymer, as used herein, includes copolymers and the like. Thus, as used herein, the terms "polyethylene," "ethylene polymer," "ethylene copolymer," and "ethylene based polymer" mean a polymer or copolymer comprising at least 50 mol% ethylene units (preferably at least 70 mol% ethylene units, more preferably at least 80 mol% ethylene units, even more preferably at least 90 mol% ethylene units, even more preferably at least 95 mol% ethylene units or 100 mol% ethylene units (in the case of a homopolymer)). Furthermore, the term "polyethylene composition" means a composition containing one or more polyethylene components.

As used herein, when a polymer is referred to as comprising a monomer, the monomer is present in the polymer in the polymerized form of the monomer or in the derivative form of the monomer.

As used herein, when a polymer is said to comprise a certain percentage, wt%, of a monomer, that percentage of monomer is based on the total amount of monomer units in the polymer.

For purposes of this invention and the claims thereto, an ethylene polymer having a density of 0.910 to 0.940 g/cm³ is referred to as a "low density polyethylene" (LDPE); an ethylene polymer having a density of 0.890 to 0.940 g/cm³, typically from 0.915 to 0.930 g/cm³, that is linear and does not contain a substantial amount of long-chain branching is referred to as "linear low density polyethylene" (LLDPE) and can be produced with conventional Ziegler-Natta catalysts, vanadium catalysts, or with metallocene catalysts in gas phase reactors, high pressure tubular reactors, and/or in slurry reactors and/or with any of the disclosed catalysts in solution reactors ("linear" means that the polyethylene has no or only a few long-chain branches, typically referred to as a g'vis of 0.97 or above, preferably 0.98 or above); and an ethylene polymer having a density of more than 0.940 g/cm³ is referred to as a "high density polyethylene" (HDPE).

As used herein, "core" layer, "outer" layer, and "inner" layer are merely identifiers used for convenience, and shall not be construed as limitation on individual layers, their relative positions, or the laminated structure, unless otherwise specified herein.

As used herein, "first" polyethylene, "second" polyethylene, "third" polyethylene, "fourth" polyethylene, "fifth" polyethylene, and "sixth" polyethylene are merely identifiers used for convenience, and shall not be construed as limitation on individual polyethylene, their relative order, or the number of polyethylenes used, unless otherwise specified herein.

As used herein, film layers that are the same in composition and in thickness are referred to as "identical" layers.

### Polyethylene

In one aspect of the invention, the polyethylene that can be used for the multilayer film described herein are selected from ethylene homopolymers, ethylene copolymers, and compositions thereof. Useful copolymers comprise one or more comonomers in addition to ethylene and can be a random copolymer, a statistical copolymer, a block copolymer, and/or compositions thereof. The method of making the polyethylene is not critical, as it can be made by slurry, solution, gas phase, high pressure or other suitable processes, and by using catalyst systems appropriate for the polymerization of polyethylenes, such as Ziegler-Natta-type catalysts, chromium catalysts, metallocene-type catalysts, other appropriate catalyst systems or combinations thereof, or by free-radical polymerization. In a preferred embodiment, the polyethylenes are made by the catalysts, activators and processes described in U.S. Patent Nos. 6,342,566; 6,384,142; and 5,741,563; and WO 03/040201 and WO 97/19991. Such catalysts are well known in the art, and are described in, for example, ZIEGLER CATALYSTS (Gerhard Fink, Rolf Mülhaupt and Hans H. Brintzinger, eds., Springer-Verlag 1995); Resconi et al.; and I, II METALLOCENE-BASED POLYOLEFINS (Wiley & Sons 2000).

Polyethylenes that are useful in this invention include those sold by ExxonMobil Chemical Company in Houston Texas, including HDPE, LLDPE, and LDPE; and those sold under the ENABLE™, EXACT™, EXCEED™, ESCORENE™, EXXCO™, ESCOR™, PAXON™, and OPTEMA™ trade names.

Preferred ethylene homopolymers and copolymers useful in this invention typically have one or more of the following properties:
1. an M_{w} of 20,000 g/mol or more, 20,000 to 2,000,000 g/mol, preferably 30,000 to 1,000,000, preferably 40,000 to 200,000, preferably 50,000 to 750,000, as measured by size exclusion chromatography; and/or
2. a Tₘ of 30°C to 150°C, preferably 30°C to 140°C, preferably 50°C to 140°C, more preferably 60°C to 135°C, as determined based on ASTM D3418-03; and/or
3. a crystallinity of 5% to 80%, preferably 10% to 70%, more preferably 20% to 60%, preferably at least 30%, or at least 40%, or at least 50%, as determined based on ASTM D3418-03; and/or
4. a heat of fusion of 300 J/g or less, preferably 1 to 260 J/g, preferably 5 to 240 J/g, preferably 10 to 200 J/g, as determined based on ASTM D3418-03; and/or
5. a crystallization temperature (Tc) of 15°C to 130°C, preferably 20°C to 120°C, more preferably 25°C to 110°C, preferably 60°C to 125°C, as determined based on ASTM D3418-03; and/or
6. a heat deflection temperature of 30°C to 120°C, preferably 40°C to 100°C, more preferably 50°C to 80°C as measured based on ASTM D648 on injection molded flexure bars, at 66 psi load (455 kPa); and/or
7. a Shore hardness (D scale) of 10 or more, preferably 20 or more, preferably 30 or more, preferably 40 or more, preferably 100 or less, preferably from 25 to 75 (as measured based on ASTM D 2240); and/or
8. a percent amorphous content of at least 50%, preferably at least 60%, preferably at least 70%, more preferably between 50% and 95%, or 70% or less, preferably 60% or less, preferably 50% or less as determined by subtracting the percent crystallinity from 100.

The polyethylene may be an ethylene homopolymer, such as HDPE. In one embodiment, the ethylene homopolymer has a molecular weight distribution (M_{w}/Mₙ) or (MWD) of up to 40, preferably ranging from 1.5 to 20, or from 1.8 to 10, or from 1.9 to 5, or from 2.0 to 4. In another embodiment, the 1% secant flexural modulus (determined based on ASTM D790A, where test specimen geometry is as specified under the ASTM D790 section "Molding Materials (Thermoplastics and Thermosets)," and the support span is 2 inches (5.08 cm)) of the polyethylene falls in a range of 200 to 1000 MPa, and from 300 to 800 MPa in another embodiment, and from 400 to 750 MPa in yet another embodiment, wherein a desirable polymer may exhibit any combination of any upper flexural modulus limit with any lower flexural modulus limit. The MI of preferred ethylene homopolymers range from 0.05 to 800 dg/min in one embodiment, and from 0.1 to 100 dg/min in another embodiment, as measured based on ASTM D1238 (190°C, 2.16 kg).

In a preferred embodiment, the polyethylene comprises less than 20 mol% propylene units (preferably less than 15 mol%, preferably less than 10 mol%, preferably less than 5 mol%, and preferably 0 mol% propylene units).

In another embodiment of the invention, the polyethylene useful herein is produced by polymerization of ethylene and, optionally, an alpha-olefin with a catalyst having, as a transition metal component, a bis (n-C₃₋₄ alkyl cyclopentadienyl) hafnium compound, wherein the transition metal component preferably comprises from about 95 mol% to about 99 mol% of the hafnium compound as further described in U.S. Patent No. 9,956,088.

In another embodiment of the invention, the polyethylene is an ethylene copolymer, either random or block, of ethylene and one or more comonomers selected from C₃ to C₂₀ α-olefins, typically from C₃ to C₁₀ α-olefins. Preferably, the comonomers are present from 0.1 wt% to 50 wt% of the copolymer in one embodiment, and from 0.5 wt% to 30 wt% in another embodiment, and from 1 wt% to 15 wt% in yet another embodiment, and from 0.1 wt% to 5 wt% in yet another embodiment, wherein a desirable copolymer comprises ethylene and C₃ to C₂₀ α-olefin derived units in any combination of any upper wt% limit with any lower wt% limit described herein. Preferably the ethylene copolymer will have a weight average molecular weight of from greater than 8,000 g/mol in one embodiment, and greater than 10,000 g/mol in another embodiment, and greater than 12,000 g/mol in yet another embodiment, and greater than 20,000 g/mol in yet another embodiment, and less than 1,000,000 g/mol in yet another embodiment, and less than 800,000 g/mol in yet another embodiment, wherein a desirable copolymer may comprise any upper molecular weight limit with any lower molecular weight limit described herein.

In another embodiment, the ethylene copolymer comprises ethylene and one or more other monomers selected from the group consisting of C₃ to C₂₀ linear, branched or cyclic monomers, and in some embodiments is a C₃ to C₁₂ linear or branched alpha-olefin, preferably butene, pentene, hexene, heptene, octene, nonene, decene, dodecene, 4-methylpentene-1,3-methyl pentene-1,3,5,5-trimethyl-hexene-1, and the like. The monomers may be present at up to 50 wt%, preferably from up to 40 wt%, more preferably from 0.5 wt% to 30 wt%, more preferably from 2 wt% to 30 wt%, more preferably from 5 wt% to 20 wt%, based on the total weight of the ethylene copolymer.

Preferred linear alpha-olefins useful as comonomers for the ethylene copolymers useful in this invention include C₃ to C₈ alpha-olefins, more preferably 1-butene, 1-hexene, and 1-octene, even more preferably 1-hexene. Preferred branched alpha-olefins include 4-methyl-1-pentene, 3-methyl-1-pentene, 3,5,5-trimethyl-1-hexene, and 5-ethyl-1-nonene. Preferred aromatic-group-containing monomers contain up to 30 carbon atoms. Suitable aromatic-group-containing monomers comprise at least one aromatic structure, preferably from one to three, more preferably a phenyl, indenyl, fluorenyl, or naphthyl moiety. The aromatic-group-containing monomer further comprises at least one polymerizable double bond such that after polymerization, the aromatic structure will be pendant from the polymer backbone. The aromatic-group containing monomer may further be substituted with one or more hydrocarbyl groups including but not limited to C₁ to C₁₀ alkyl groups. Additionally, two adjacent substitutions may be joined to form a ring structure. Preferred aromatic-group-containing monomers contain at least one aromatic structure appended to a polymerizable olefinic moiety. Particularly, preferred aromatic monomers include styrene, alphamethylstyrene, para-alkylstyrenes, vinyltoluenes, vinylnaphthalene, allyl benzene, and indene, especially styrene, paramethyl styrene, 4-phenyl-1-butene and allyl benzene.

Preferred diolefin monomers useful in this invention include any hydrocarbon structure, preferably C₄ to C₃₀, having at least two unsaturated bonds, wherein at least two of the unsaturated bonds are readily incorporated into a polymer by either a stereospecific or a non-stereospecific catalyst(s). It is further preferred that the diolefin monomers be selected from alpha, omega-diene monomers (i.e., di-vinyl monomers). More preferably, the diolefin monomers are linear di-vinyl monomers, most preferably those containing from 4 to 30 carbon atoms. Examples of preferred dienes include butadiene, pentadiene, hexadiene, heptadiene, octadiene, nonadiene, decadiene, undecadiene, dodecadiene, tridecadiene, tetradecadiene, pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, particularly preferred dienes include 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, and low molecular weight polybutadienes (Mw less than 1000 g/mol). Preferred cyclic dienes include cyclopentadiene, vinylnorbomene, norbornadiene, ethylidene norbornene, divinylbenzene, dicyclopentadiene, or higher ring containing diolefins with or without substituents at various ring positions.

In a preferred embodiment, one or more dienes are present in the polyethylene at up to 10 wt%, preferably at 0.00001 wt% to 2 wt%, preferably 0.002 wt% to 1 wt%, even more preferably 0.003 wt% to 0.5 wt%, based upon the total weight of the polyethylene. In some embodiments, diene is added to the polymerization in an amount of from an upper limit of 500 ppm, 400 ppm, or 300 ppm to a lower limit of 50 ppm, 100 ppm, or 150 ppm.

Preferred ethylene copolymers useful herein are preferably a copolymer comprising at least 50 wt% ethylene and having up to 50 wt%, preferably 1 wt% to 35 wt%, even more preferably 1 wt% to 6 wt% of a C₃ to C₂₀ comonomer, preferably a C₄ to C₈ comonomer, preferably hexene or octene, based upon the weight of the copolymer. Preferably these polymers are metallocene polyethylenes (mPEs).

Useful mPE homopolymers or copolymers may be produced using mono- or bis-cyclopentadienyl transition metal catalysts in combination with an activator of alumoxane and/or a non-coordinating anion in solution, slurry, high pressure or gas phase. The catalyst and activator may be supported or unsupported and the cyclopentadienyl rings may be substituted or unsubstituted. Several commercial products produced with such catalyst/activator combinations are commercially available from ExxonMobil Chemical Company in Houston, Texas under the trade name EXCEED™ Polyethylene or ENABLE™ Polyethylene.

According to the invention, the multilayer film described herein comprises a first polyethylene (as a polyethylene defined herein) in at least one of the outer layers. The first polyethylene has a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25. More preferably, the first polyethylene has a density of about 0.900 to about 0.920 g/cm³, an MI, I_{2.16}, of about 0.5 to about 5 g/10 min, an MWD of about 1.5 to about 5.5, and an MIR, I_{21.6}/I_{2.16}, of about 10 to about 25.

In various embodiments, the first polyethylene may have one or more of the following properties:
(a) a density (sample prepared according to ASTM D-4703, and the measurement according to ASTM D-1505) of about 0.910 to about 0.935 g/cm³;
(b) a Melt Index ("MI", I_{2.16}, ASTM D-1238, 2.16 kg, 190°C) of about 0.3 to about 10 g/10 min, or about 0.5 to about 5 g/10 min;
c) a Composition Distribution Breadth Index ("CDBI") of up to about 85%, or up to about 75%, or about 5 to about 85%, or 10 to 75%. The CDBI may be determined using techniques for isolating individual fractions of a sample of the resin. The preferred technique is Temperature Rising Elution Fraction ("TREF"), as described in Wild, et al., J. Poly. Sci., Poly. Phys. Ed., Vol. 20, p. 441 (1982), which is incorporated herein for purposes of U.S. practice;
d) a molecular weight distribution ("MWD") of about 1.5 to about 5.5; MWD is measured using a gel permeation chromatograph ("GPC") on a Waters 150 gel permeation chromatograph equipped with a differential refractive index ("DRI") detector and a Chromatix KMX-6 on line light scattering photometer. The system is used at 135°C with 1,2,4-trichlorobenzene as the mobile phase using Shodex (Showa Denko America, Inc.) polystyrene gel columns 802, 803, 804, and 805. This technique is discussed in "Liquid Chromatography of Polymers and Related Materials III," J. Cazes editor, Marcel Dekker, 1981, p. 207, which is incorporated herein by reference. Polystyrene is used for calibration. No corrections for column spreading are employed; however, data on generally accepted standards, e.g., National Bureau of Standards Polyethylene 1484 and anionically produced hydrogenated polyisoprenes (alternating ethylene-propylene copolymers) demonstrate that such corrections on MWD are less than 0.05 units. M_{w}/Mₙ is calculated from elution times. The numerical analyses are performed using the commercially available Beckman/CIS customized LALLS software in conjunction with the standard Gel Permeation package. Reference to M_{w}/Mₙ implies that the M_{w} is the value reported using the LALLS detector and Mₙ is the value reported using the DRI detector described above; and/or
(e) a branching index of about 0.9 to about 1.0, or about 0.96 to about 1.0, or about 0.97 to about 1.0. Branching Index is an indication of the amount of branching of the polymer and is defined as g'=[Rg]²*_{br}*/[Rg]²*ₗᵢₙ*. "Rg" stands for Radius of Gyration, and is measured using a Waters 150 gel permeation chromatograph equipped with a Multi-Angle Laser Light Scattering ("MALLS") detector, a viscosity detector and a differential refractive index detector. "[Rg]*_{br}*" is the Radius of Gyration for the branched polymer sample and "[Rg]*ₗᵢₘ*" is the Radius of Gyration for a linear polymer sample. The branching index is inversely proportional to the amount of branching. Thus, lower values for g' indicate relatively higher amounts of branching. The amounts of short and long-chain branching each contribute to the branching index according to the formula: g'=g'_{LCB} × g'_{SCB}. Thus, the branching index due to long-chain branching may be calculated from the experimentally determined value for g' as described by Scholte, et al, in J. App. Polymer Sci., 29, pp. 3763-3782 (1984).

The first polyethylene is not limited by any particular method of preparation and may be formed using any process known in the art. For example, the first polyethylene may be formed using gas phase, solution, or slurry processes.

In one embodiment, the first polyethylene is formed in the presence of a metallocene catalyst. For example, the first polyethylene may be an mPE produced using mono- or bis-cyclopentadienyl transition metal catalysts in combination with an activator of alumoxane and/or a non-coordinating anion in solution, slurry, high pressure or gas phase. The catalyst and activator may be supported or unsupported and the cyclopentadienyl rings may be substituted or unsubstituted. Polyethylenes useful as the first polyethylene include those commercially available from ExxonMobil Chemical Company in Houston, Texas, such as those sold under the trade designation EXCEED™.

The multilayer film described herein comprises in the core layer a second polyethylene, as a polyethylene defined herein, having a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25. In various embodiments, the second polyethylene may have one or more of the properties or be prepared as defined above for the first polyethylene. The second polyethylene may be the same as or different from the first polyethylene.

The multilayer film described herein comprises in the two inner layers, located each between the core layer and each outer layer a third polyethylene, as a polyethylene defined herein, having a density of more than 0.940 g/cm³, preferably about 0.940 g/cm³ to about 0.965 g/cm³. The third polyethylene is typically prepared with either Ziegler-Natta or chromium-based catalysts in slurry reactors, gas phase reactors, or solution reactors. Polyethylenes useful as the third polyethylene in this invention include those commercially available from ExxonMobil Chemical Company in Houston, Texas, such as HDPE.

In accordance with a preferred embodiment, at least one of the outer layers of the multilayer film described herein further comprises a fourth polyethylene (as a polyethylene defined herein) having a density of about 0.910 to about 0.945 g/cm³, an MI, I_{2.16}, of about 0.1 to about 15 g/10 min, an MWD of about 2.5 to about 5.5, and an MIR, I_{21.6}/I_{2.16}, of about 25 to about 100. In various embodiments, the fourth polyethylene may have one or more of the following properties:
(a) a density (sample prepared according to ASTM D-4703, and the measurement according to ASTM D-1505) of about 0.910 to about 0.945 g/cm³, or about 0.915 to about 0.940 g/cm³;
(b) an MI (I_{2.16}, ASTM D-1238, 2.16 kg, 190°C) of about 0.1 to about 15 g/10 min, or about 0.1 to about 10 g/10 min, or about 0.1 to about 5 g/10 min;
(c) an MIR (I_{21.6} (190°C, 21.6 kg)/I_{2.16} (190°C, 2.16 kg)) of greater than 25 to about 100, or greater than 30 to about 90, or greater than 35 to about 80;
(d) a CDBI (determined according to the procedure disclosed herein) of greater than about 50%, or greater than about 60%, or greater than 75%, or greater than 85%;
(e) an MWD of about 2.5 to about 5.5; MWD is measured according to the procedure disclosed herein; and/or
(f) a branching index ("g", determined according to the procedure described herein) of about 0.5 to about 0.97, or about 0.7 to about 0.95.

The fourth polyethylene is not limited by any particular method of preparation and may be formed using any process known in the art. For example, the fourth polyethylene may be formed using gas phase, solution, or slurry processes.

In one embodiment, the second polyethylene is formed in the presence of a Ziegler-Natta catalyst. In another embodiment, the second polyethylene is formed in the presence of a single-site catalyst, such as a metallocene catalyst (such as any of those described herein). Polyethylenes useful as the second polyethylene in this invention include those disclosed in U.S. Patent No. 6,255,426, entitled "Easy Processing Linear Low Density Polyethylene" (Lue), which is hereby incorporated by reference for this purpose, and include those commercially available from ExxonMobil Chemical Company in Houston, Texas, such as those sold under the trade designation ENABLE™.

In another preferred embodiment, the core layer of the multilayer film described herein may further comprise a fifth polyethylene (as a polyethylene defined herein) having a density of more than 0.940 g/cm³. In various embodiments, the fifth polyethylene may conform to characteristics as set out above for the third polyethylene. The fifth polyethylene may be the same as or different from the third polyethylene.

In yet another preferred embodiment, at least one of the inner layers of the multilayer film described herein may further comprise a sixth polyethylene (as a polyethylene defined herein) having a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25. In various embodiments, the sixth polyethylene may have one or more of the properties or be prepared as defined above for the first polyethylene. The sixth polyethylene may be the same as or different from the first polyethylene.

The first polyethylene present in at least one of the outer layers, the second polyethylene present in the core layer, and the third polyethylene present in at least one of the inner layers of the multilayer film described herein may be optionally in a blend with one or more other polymers, such as polyethylenes defined herein, which blend is referred to as polyethylene composition. In particular, the polyethylene compositions described herein may be physical blends or *in situ* blends of more than one type of polyethylene or compositions of polyethylenes with polymers other than polyethylenes where the polyethylene component is the majority component, e.g., greater than 50 wt% of the total weight of the composition. Preferably, the polyethylene composition is a blend of two polyethylenes with different densities.

In a preferred embodiment, the first polyethylene can be present in an amount of at least about 70 wt%, for example, about 70 wt%, about 75 wt%, about 80 wt%, about 85 wt%, about 90 wt%, about 95 wt%, or about 100 wt%, based on total weight of the outer layer. In another preferred embodiment, the second polyethylene is present in an amount of at least about 35 wt%, for example, anywhere between 35 wt%, 40 wt%, 45 wt%, 50 wt%, 55 wt%, 60 wt%, 65 wt%, or 70 wt%, and 75 wt%, 80 wt%, 85 wt%, 90 wt%, 95 wt%, or 100 wt%, based on total weight of the core layer. In yet another preferred embodiment, the third polyethylene is present in an amount of at least about 30 wt%, at least about 35 wt%, at least about 40 wt%, at least about 45 wt%, at least about 50 wt%, at least about 55 wt%, at least about 60 wt%, at least about 65 wt%, at least about 70 wt%, at least about 75 wt%, at least about 80 wt%, at least about 85 wt%, at least about 90 wt%, or at least about 95 wt%, based on total weight of the inner layer.

It has been surprisingly discovered that use of the inventive film design of at least five layers as described herein to split the functionality of the core layer in the traditional three-layer film structure can provide well-tailored film properties favored by a particular application while optimizing balance between properties repulsive to each other. Especially, as long as a multilayer film is prepared with layer compositions as described herein, stiffness-related and toughness-related properties can be respectively highlighted by adjusting composition and position of the layer having highest density of all layers. Specifically, stiffness-related properties, including creep resistance and tensile properties, can be enhanced by preparing the inner layer as the one having the highest density of all layers while toughness-related properties, including tear resistance and dart impact, by moving density focus away from the inner layer to the core layer and/or the outer layer. In addition, a better-compromised balance between stiffness-related and toughness-related properties can also be achieved, leading to improved overall film performance optionally with a gauge reduction of at least about 8%. In other words, by virtue of the inner layers absent in the conventional three-layer structure, desired film property profile and balanced overall film performance can be simultaneously satisfied in a more convenient and more flexible way with the inventive film described herein than with the conventional three-layer film without changing the polyethylenes used.

### Additives

The multilayer film described herein may also contain in at least one layer various additives as generally known in the art. Examples of such additives include a slip agent, an antiblock, a filler, an antioxidant, an ultraviolet light stabilizer, a thermal stabilizer, a pigment, a processing aid, a crosslinking catalyst, a flame retardant, and a foaming agent, etc. Preferably, the additives may each individually present in an amount of about 0.01 wt% to about 50 wt%, or about 0.1 wt% to about 15 wt%, or from 1 wt% to 10 wt%, based on total weight of the film layer.

Any additive useful for the multilayer film may be provided separately or together with other additive(s) of the same or a different type in a pre-blended masterbatch, where the target concentration of the additive is reached by combining each neat additive component in an appropriate amount to make the final composition.

### Film Structures

The multilayer film of the present invention may further comprise additional layer(s), which may be any layer typically included in multilayer film constructions. For example, the additional layer(s) may be made from:
1. Polyolefins. Preferred polyolefins include homopolymers or copolymers of C₂ to C₄₀ olefins, preferably C₂ to C₂₀ olefins, preferably a copolymer of an α-olefin and another olefin or α-olefin (ethylene is defined to be an α-olefin for purposes of this invention). Preferably homopolyethylene, homopolypropylene, propylene copolymerized with ethylene and/or butene, ethylene copolymerized with one or more of propylene, butene or hexene, and optional dienes. Preferred examples include thermoplastic polymers such as ultra-low density polyethylene, very low density polyethylene, linear low density polyethylene, low density polyethylene, medium density polyethylene, high density polyethylene, polypropylene, isotactic polypropylene, highly isotactic polypropylene, syndiotactic polypropylene, random copolymer of propylene and ethylene and/or butene and/or hexene, elastomers such as ethylene propylene rubber, ethylene propylene diene monomer rubber, neoprene, and compositions of thermoplastic polymers and elastomers, such as, for example, thermoplastic elastomers and rubber toughened plastics.
2. Polar polymers. Preferred polar polymers include homopolymers and copolymers of esters, amides, acetates, anhydrides, copolymers of a C₂ to C₂₀ olefin, such as ethylene and/or propylene and/or butene with one or more polar monomers, such as acetates, anhydrides, esters, alcohol, and/or acrylics. Preferred examples include polyesters, polyamides, ethylene vinyl acetate copolymers, and polyvinyl chloride.
3. Cationic polymers. Preferred cationic polymers include polymers or copolymers of geminally disubstituted olefins, α-heteroatom olefins and/or styrenic monomers. Preferred geminally disubstituted olefins include isobutylene, isopentene, isoheptene, isohexane, isooctene, isodecene, and isododecene. Preferred α-heteroatom olefins include vinyl ether and vinyl carbazole, preferred styrenic monomers include styrene, alkyl styrene, para-alkyl styrene, α-methyl styrene, chloro-styrene, and bromo-para-methyl styrene. Preferred examples of cationic polymers include butyl rubber, isobutylene copolymerized with para methyl styrene, polystyrene, and poly-α-methyl styrene.
4. Miscellaneous. Other preferred layers can be paper, wood, cardboard, metal, metal foils (such as aluminum foil and tin foil), metallized surfaces, glass (including silicon oxide (SiOₓ) coatings applied by evaporating silicon oxide onto a film surface), fabric, spunbond fibers, and non-wovens (particularly polypropylene spunbond fibers or non-wovens), and substrates coated with inks, dyes, pigments, and the like.

In particular, a multilayer film can also include layers comprising materials such as ethylene vinyl alcohol (EVOH), polyamide (PA), polyvinylidene chloride (PVDC), or aluminum, so as to obtain barrier performance for the film where appropriate.

In one aspect of the invention, the multilayer film described herein may be produced in a stiff oriented form (often referred to as "pre-stretched" by persons skilled in the art) and may be useful for laminating to inelastic materials, such as polyethylene films, biaxially oriented polyester (e.g., polyethylene terephthalate (PET)) films, biaxially oriented polypropylene (BOPP) films, biaxially oriented polyamide (nylon) films, foil, paper, board, or fabric substrates, or may further comprise one of the above substrate films to form a laminate structure.

The thickness of the multilayer films ranges from 80 to 150 µm or even more preferably from 80 to 100 µm. The total thickness of the two outer layers may be at most about 50%, for example, about 10%, about 20%, about 30%, about 40%, about 50%, or in the range of any combinations of the values recited herein, of the total thickness of the multilayer film. The total thickness of the two inner layers may be at most about 60%, for example, about 10%, about 20%, about 30%, about 40%, about 50%, about 60%, or in the range of any combinations of the values recited herein, of the total thickness of the multilayer film.

The multilayer film described herein has an A/B/X/B/A structure wherein A are outer layers and X represents the core layer and B are inner layers between the core layer and each outer layer. The composition of the A layers may be the same or different, but conform to the limitations set out herein. Preferably, the two A layers are identical. The composition of the B layers may also be the same or different, but conform to the limitations set out herein. Preferably, the two B layers are identical. Typically, in terms of the layer having the highest density among all layers, at least one of the B layers is favored by stiffness-oriented solutions, while the X layer or at least one of the A layers favored by toughness-oriented solutions.

In a preferred embodiment, the multilayer film has a five-layer A/B/X/B/A structure, comprising: (a) two outer layers, each comprising: (i) at least about 70 wt% of a first polyethylene, based on total weight of the outer layer, wherein the first polyethylene has a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25; and (ii) a fourth polyethylene having a density of about 0.910 to about 0.945 g/cm³, an MI, I_{2.16}, of about 0.1 to about 15 g/10 min, an MWD of about 2.5 to about 5.5, and an MIR, I_{21.6}/I_{2.16}, of about 25 to about 100; (b) a core layer between the two outer layers, the core layer comprising about 100 wt% of a second polyethylene, based on total weight of the core layer, wherein the second polyethylene has a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25; and (c) two inner layers each between the core layer and each outer layer, wherein each of the inner layers comprises at least about 90 wt% of a third polyethylene, based on total weight of the inner layer, wherein the third polyethylene has a density of at least about 0.940 g/cm³; wherein the multilayer film has the following properties: (i) a dart impact of at least about 500 g; and (ii) a creep resistance of no more than about 30%. Preferably, the five-layer film further has at least one of the following properties: (i) a bending stiffness factor of at least about 35 mN.mm; (ii) a 1% Secant Modulus of at least about 700 N/15 mm in MD and of at least about 750 N/15 mm in TD; (v) an Elmendorf tear of at least 350 g in MD; and (iv) a puncture energy at break of at least about 7.2 mJ.

In another preferred embodiment, the multilayer film has a five-layer A/B/X/B/A structure, comprising: (a) two outer layers, each comprising: (i) at least about 70 wt% of a first polyethylene, based on total weight of the outer layer, wherein the first polyethylene has a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25; and (ii) a fourth polyethylene having a density of about 0.910 to about 0.945 g/cm³, an MI, I_{2.16}, of about 0.1 to about 15 g/10 min, an MWD of about 2.5 to about 5.5, and an MIR, I_{21.6}/I_{2.16}, of about 25 to about 100; (b) a core layer between the two outer layers, the core layer comprising at least about 35 wt% of a second polyethylene, based on total weight of the core layer, wherein the second polyethylene has a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25; and (c) two inner layers each between the core layer and each outer layer, wherein each of the inner layers comprises: (i) at least about 30 wt% of a third polyethylene, based on total weight of the inner layer, wherein the third polyethylene has a density of at least about 0.940 g/cm³; and (ii) a sixth polyethylene having a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25; wherein the multilayer film has the following properties: (i) a dart impact of at least about 580 g; and (ii) a creep resistance of no more than about 50%. Preferably, the five-layer film further has at least one of the following properties: (i) a bending stiffness factor of at least about 25 mN.mm; (ii) a 1% Secant Modulus of at least about 550 N/15 mm in MD and of at least about 550 N/15 mm in TD; (iii) an Elmendorf tear of at least 600 g in MD; and (iv) a puncture energy at break of at least about 7.7 mJ.

In preferred embodiments where the multilayer film has a five-layer A/B/X/B/A structure, the two outer layers have in a total thickness of at most about 50% of the total thickness of the five-layer film and the two inner layers have a total thickness of at most about 60% of the total thickness of the five-layer film. More preferably, the five-layer film has a total thickness of about 80 to about 150 µm.

### Film Properties and Applications

The film structures are used to prepare heavy duty bags. The bags may be made on vertical or horizontal form, fill and seal equipment. The film may be used in flexible packaging, food packaging, e.g., fresh cut produce packaging, frozen food packaging, bundling, packaging and unitizing a variety of products. A package comprising a multilayer film described herein can be heat sealed around package content.

The multilayer film described herein or made according to any method disclosed herein has: (i) a dart impact of at least about 500 g; and (ii) a creep resistance of no more than about 50%. Preferably, the multilayer film further has at least one of the following properties: (i) a bending stiffness factor of at least about 25 mN.mm; (ii) a 1% Secant Modulus of at least about 550 N/15 mm in Machine Direction (MD) and of at least about 550 N/15 mm in Transverse Direction (TD); (iii) an Elmendorf tear of at least 350 g in MD; and (iv) a puncture energy at break of at least about 7.2 mJ.

With the present invention, by modifying position and composition of the layer having highest density of all layers as set out herein, the long-standing difficulty in emphasizing application-oriented properties while maximizing overall film performance achievable of a three-layer film without increasing polyethylene consumption can be addressed.

### Methods for Making the Multilayer Film

Also provided are methods for making multilayer films of the present invention. A method for making a multilayer film may comprise the steps of: (a) preparing two outer layers, wherein at least one of the outer layer comprises a first polyethylene having a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25; (b) preparing a core layer between the two outer layers, the core layer comprising a second polyethylene having a density of about 0.910 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 25; (c) preparing two inner layers each between the core layer and each outer layer, wherein at least one of the inner layers comprises a third polyethylene having a density of at least about 0.940 g/cm³; and (d) forming a film comprising the layers in steps (a) to (c); wherein the multilayer film has: (i) a dart impact of at least about 500 g; and (ii) a creep resistance of no more than about 50%. Preferably, the multilayer film further has at least one of the following properties: (i) a bending stiffness factor of at least about 25 mN.mm; (ii) a 1% Secant Modulus of at least about 550 N/15 mm in MD and of at least about 550 N/15 mm in TD; (iii) an Elmendorf tear of at least 350 g in MD; and (iv) a puncture energy at break of at least about 7.2 mJ.

The multilayer films described herein may be formed by any of the conventional techniques known in the art including blown extrusion, cast extrusion, coextrusion, blow molding, casting, and extrusion blow molding.

In one embodiment of the invention, the multilayer films of the present invention may be formed by using blown techniques, i.e., to form a blown film. For example, the composition described herein can be extruded in a molten state through an annular die and then blown and cooled to form a tubular, blown film, which can then be axially slit and unfolded to form a flat film. As a specific example, blown films can be prepared as follows. The polymer composition is introduced into the feed hopper of an extruder, such as a 50 mm extruder that is water-cooled, resistance heated, and has an L/D ratio of 30:1. The film can be produced using a 28 cm W&H die with a 1.4 mm die gap, along with a W&H dual air ring and internal bubble cooling. The film is extruded through the die into a film cooled by blowing air onto the surface of the film. The film is drawn from the die typically forming a cylindrical film that is cooled, collapsed and, optionally, subjected to a desired auxiliary process, such as slitting, treating, sealing, or printing. Typical melt temperatures are from about 180°C to about 230°C. Blown film rates are generally from about 3 to about 25 kilograms per hour per inch (about 4.35 to about 26.11 kilograms per hour per centimeter) of die circumference. The finished film can be wound into rolls for later processing. A particular blown film process and apparatus suitable for forming films according to embodiments of the present invention is described in U.S. Patent No. 5,569,693. Of course, other blown film forming methods can also be used.

The compositions prepared as described herein are also suited for the manufacture of blown film in a high-stalk extrusion process. In this process, a polyethylene melt is fed through a gap (typically 0.5 to 1.6 mm) in an annular die attached to an extruder and forms a tube of molten polymer which is moved vertically upward. The initial diameter of the molten tube is approximately the same as that of the annular die. Pressurized air is fed to the interior of the tube to maintain a constant air volume inside the bubble. This air pressure results in a rapid 3-to-9-fold increase of the tube diameter which occurs at a height of approximately 5 to 10 times the die diameter above the exit point of the tube from the die. The increase in the tube diameter is accompanied by a reduction of its wall thickness to a final value ranging from approximately 10 to 50 µm and by a development of biaxial orientation in the melt. The expanded molten tube is rapidly cooled (which induces crystallization of the polymer), collapsed between a pair of nip rolls and wound onto a film roll.

In blown film extrusion, the film may be pulled upwards by, for example, pinch rollers after exiting from the die and is simultaneously inflated and stretched transversely sideways to an extent that can be quantified by the blow up ratio (BUR). The inflation provides TD stretch, while the upwards pull by the pinch rollers provides MD stretch. As the polymer cools after exiting the die and inflation, it crystallizes and a point is reached where crystallization in the film is sufficient to prevent further MD or TD orientation. The location at which further MD or TD orientation stops is generally referred to as the "frost line" because of the development of haze at that location.

Variables in this process that determine the ultimate film properties include the die gap, the BUR and TD stretch, the take up speed and MD stretch and the frost line height. Certain factors tend to limit production speed and are largely determined by the polymer rheology including the shear sensitivity which determines the maximum output and the melt tension which limits the bubble stability, BUR and take up speed.

A laminate structure with the inventive multilayer film prepared as described herein can be formed by lamination to a substrate film using any process known in the art, including solvent based adhesive lamination, solvent less adhesive lamination, extrusion lamination, heat lamination, etc.

### EXAMPLES

The present invention, while not meant to be limited by, may be better understood by reference to the following examples and tables.

### Example 1

Example 1 illustrates stiffness and toughness performance demonstrated by a batch of 11 inventive film samples (Samples 1-11) with an A/B/X/B/A structure prepared on a coextrusion blown film line with a BUR of 2.5. Polymer and additive products used in the samples include: EXCEED™ 1018HA mPE resin (density: 0.918 g/cm³, MI: 1.0 g/10 min) (ExxonMobil Chemical Company, Houston, Texas, USA), EXCEED™ 1012HA mVLDPE mPE resin (density: 0.912 g/cm³, MI: 1.0 g/10 min) (ExxonMobil Chemical Company, Houston, Texas, USA), EXXONMOBIL™ HDPE HTA 002 HDPE resin (density: 0.952 g/cm³) (ExxonMobil Chemical Company, Houston, Texas, USA), ENABLE™ 20-05HH mPE resin (density: 0.920 g/cm³, MI: 0.5 g/10 min) (ExxonMobil Chemical Company, Houston, Texas, USA), ENABLE™ 27-05HH mPE resin (density: 0.927 g/cm³, MI: 0.5 g/10 min) (ExxonMobil Chemical Company, Houston, Texas, USA), EXXONMOBIL™ LDPE LD 150BW LDPE resin (density: 0.923 g/cm³, MI: 0.75 g/10min) (ExxonMobil Chemical Company, Houston, Texas, USA), and EXXONMOBIL™ LLDPE LL 1001XV LLDPE resin (density: 0.918 g/cm³, MI: 1.0 g/10min) (ExxonMobil Chemical Company, Houston, Texas, USA); the POLYBATCH™ F15 antiblock agent (A. Schulman, Fairlawn, Ohio, USA), and the POLYWHITE™ B8750 masterbatch (A. Schulman, Fairlawn, Ohio, USA). Structure-wise formulations (based on total weight of the film layer), thickness, and layer distribution (thickness ratio between the outer, the inner and the core layers) of the film samples are depicted in Table 1.

**Table 1: Structure-wise formulations (wt%), thickness, and layer distribution for film samples of Example 1**

| Sample No. | Outer | Inner | Core | Thickness (µm) | Layer Distribution (Outer/Inner/Core) | Preference |
|---|---|---|---|---|---|---|
| 1 | EXCEED™ 1018HA (75) ENABLE™ 20-05HH (23) POLYBATCH™ F15 (2) | EXXONMOBIL™ HDPE HTA 002 (92) POLYWHITE™ B8750 (8) | EXCEED™ 1018HA (100) | 100 | 1/2/4 | Stiffness |
| 2 | EXCEED™ 1018HA (75) ENABLE™ 20-05HH (23) POLYBATCH™ F15 (2) | EXXONMOBIL™ HDPE HTA 002 (92) POLYWHITE™ B8750 (8) | EXCEED™ 1018HA (100) | 100 | 1.5/2/3 | |
| 3 | EXCEED™ 1018HA (75) ENABLE™ 20-05HH (23) POLYBATCH™ F15 (2) | EXXONMOBIL™ HDPE HTA 002 (92) POLYWHITE™ B8750 (8) | EXCEED™ 1018HA (100) | 100 | 1/2/2 | |
| 4 | EXCEED™ 1018HA (95) EXXONMOBIL ™ LDPE LD 150BW (4) POLYBATCH™ F15 (1) | EXCEED™ 1018HA (55) EXXONMOBIL ™ HDPE HTA 002 (40) POLYWHITE™ B8750 (5) | EXCEED™ 1018HA (40) EXXONMOBIL ™ HDPE HTA 002 (60) | 100 | 1.5/2/3 | Toughness |
| 5 | EXCEED™ 1018HA (95) EXXONMOBIL ™ LDPE LD 150BW (4) POLYBATCH™ F15 (1) | EXCEED™ 1018HA (55) EXXONMOBIL ™ HDPE HTA 002 (40) POLYWHITE™ B8750 (5) | EXCEED™ 1012HA (40) EXXONMOBIL ™ HDPE HTA 002 (60) | 100 | 1.5/2/3 | |
| 6 | EXCEED™ 1018HA (95) EXXONMOBIL ™ LDPE LD 150BW (4) POL YBATCH™ F15 (1) | EXCEED™ 1018HA (65) EXXONMOBIL ™ HDPE HTA 002 (30) POLYWHITE™ B8750 (5) | EXCEED™ 1018HA (50) EXXONMOBIL ™ HDPE HTA 002 (50) | 100 | 1.5/2/3 | |
| 7 | EXCEED™ 1018HA (95) EXXONMOBIL ™ LDPE LD 150BW (4) POLYBATCH™ F15 (1) | EXCEED™ 1018HA (65) EXXONMOBIL ™HDPE HTA 002 (30) POLYWHITE™ B8750 (5) | EXCEED™ 1018HA (55) EXXONMOBIL ™ HDPE HTA 002 (45) | 100 | 1.5/1.5/4 | |
| 8 | EXCEED™ 1018HA (95) EXXONMOBIL ™ LDPE LD 150BW (4) POLYBATCH™ F15 (1) | EXCEED™ 1012HA (65) EXXONMOBIL ™HDPE HTA 002 (30) POLYWHITE™ B8750 (5) | EXCEED™ 1018HA (55) EXXONMOBIL ™ HDPE HTA 002 (45) | 100 | 1.5/1.5/4 | |
| 9 | EXCEED™ 1018HA (75) ENABLE™ 27-05HH (24) POLYBATCH™ F15 (1) | EXCEED™ 1018HA (30) EXXONMOBIL ™ HDPE HTA 002 (60) POLYWHITE™ B8750 (10) | EXCEED™ 1012HA (100) | 100 | 1/1/1 | |
| 10 | EXCEED™ 1018HA (85) EXXONMOBIL ™HDPE HTA 002 (15) | EXCEED™ 1018HA (55) EXXONMOBIL ™ HDPE HTA 002 (40) POLYWHITE™ B8750 (5) | EXCEED™ 1012HA (35) EXXONMOBIL ™HDPE HTA 002 (65) | 100 | 1.5/2/3 | |
| 11 | EXCEED™ 1018HA (75) ENABLE™ 20-05HH (23) POLYBATCH™ F15 (2) | EXCEED™ 1018HA (45) EXXONMOBIL ™HDPE HTA 002 (45) POL YWHITE™ B8750 (10) | EXXONMOBIL ™ LLDPE LL 1001XV (100) | 150 | 1/3/6 | Cost-effectiveness |

Samples were conditioned at 23°C ± 2°C and 50% ± 10% relative humidity for at least 40 hours prior to determination of all properties. Test results are listed in Table 2.

Dart impact was measured by a method following ASTM D1709 on a Dart Impact Tester Model C from Davenport Lloyd Instruments in which a pneumatically operated annular clamp is used to obtain a uniform flat specimen and the dart is automatically released by an electro-magnet as soon a sufficient air pressure is reached on the annular clamp. A dart with a 38.10 ± 0.13mm diameter hemispherical head dropped from a height of 0.66 ± 0.01 m was employed. Dart impact measures the energy causing a film to fail under specified conditions of impact of a freely-falling dart. This energy is expressed in terms of the weight (mass, g) of the dart falling from a specified height, which would result in 50% failure of tested samples. Samples have a minimum width of 20 cm and a recommended length of 10 m.

Creep resistance as used herein refers to a film's ability to resist distortion when under a load over an extended period of time and was measured according to a method specifically developed by the Applicant on a creep testing rack (Shanghai Liming Machinery Co., Ltd., China). Samples were mounted onto the rack with lower ends pinched by a Hoffman clamp bearing a 1.0 kg (for samples of no more than 125 µm) or 1.3 kg (for samples of 125 µm and above) load at 50°C. Creep resistance is expressed by percentage of the elongated film length in machine direction (MD) after five hours relative to the original film length.

Bending stiffness, as an indicator for stiffness of the material and its thickness, is the resistance against flexure and was measured by a method referred to as "two point bending method" based on DIN 53121 using a Zwick two point bending equipment mounted on the cross-head in a Zwick 1445 tensile tester. The sample is vertically clamped at one end while the force is applied to the free end of the sample normal to its plane (two point bending). The sample is fixed in an upper clamping unit while the free end pushes (upon flexure) against a thin probe (lamella) connected to a sensitive load cell capable of measuring small load values. The bending stiffness factor is defined as the moment of resistance per unit width that the film offers to bending, which can be seen as a width related flexural strength and is expressed in mN.mm.

1% Secant modulus was measured by a method based on ASTM D882 with static weighing and a constant rate of grip separation using a Zwick 1445 tensile tester with a 200N. Since rectangular shaped test samples were used, no additional extensometer was used to measure extension. The nominal width of the tested film sample is 15 mm and the initial distance between the grips is 50 mm. A pre-load of 0.1N was used to compensate for the so called TOE region at the origin of the stress-strain curve. The constant rate of separation of the grips is 5 mm/min upon reaching the pre-load and 5 mm/min to measure 1% Secant modulus (up to 1% strain). The film samples may be tested in MD and TD. 1% Secant modulus is calculated by drawing a tangent through two well defined points on the stress-strain curve. The reported value corresponds to the stress at 1% strain (with x correction). The result is expressed as load per unit area (N/15 mm). The value is an indication of the film stiffness in tension. The 1% secant modulus is used for thin film and sheets as no clear proportionality of stress to strain exists in the initial part of the curve.

Elmendorf tear strength was measured in MD based on ASTM D1922-06a using the Tear Tester 83-11-01 from TMI Group of Companies and measures the energy required to continue a pre-cut tear in the test sample, presented as tearing force in gram. Samples were cut across the web using the constant radius tear die and were free of any visible defects (e.g., die lines, gels, etc.).

Puncture resistance was measured based on CEN 14477, which is designed to provide load versus deformation response under biaxial deformation conditions at a constant relatively low test speed (change from 250 mm/min to 5 mm/min after reach pre-load (0.1N)). Puncture energy to break is the total energy absorbed by the film sample at the moment of maximum load, which is the integration of the area up to the maximum load under the load-deformation curve.

**Table 2: Mechanical properties for film samples of Example 1**

| Highlight | Stiffness | | | Toughness | | | | | | | Cost-effectiveness |
|---|---|---|---|---|---|---|---|---|---|---|---|
| Sample No. | 1 | 2 | 3 | 4 | 5 | 6 | 7 | 8 | 9 | 10 | 11 |
| Dart Impact (g) | 535 | 533 | 542 | 629 | 632 | 595 | 664 | 747 | 695 | 644 | 826 |
| Creep Resistance (%) | 22 | 25 | 17 | 42 | 48 | 47 | 49 | 50 | 47 | 37 | 35 |
| Bending Stiffness (mN.mm) | 48.9 | 37.6 | 42.6 | 29.4 | 29.0 | 25.7 | 27.6 | 25.7 | 27.4 | 32.1 | 28.5 |
| 1% Secant Modulus MD (N/15 mm) | 714 | 717 | 809 | 690 | 669 | 594 | 615 | 577.5 | 570 | 641 | 767 |
| 1% Secant Modulus TD (N/15 mm) | 800 | 795 | 903 | 713 | 669 | 603 | 624 | 582 | 603 | 642 | 887 |
| Elmendorf Tear MD (g) | 537 | 518 | 362 | 996 | 1129 | 1110 | 1118 | 1243 | 635 | 636 | 1631 |
| Puncture Energy at Break (mJ) | 8.17 | 8.45 | 7.38 | 7.84 | 8.14 | 8.95 | 8.52 | 8.65 | 10.14 | 8.92 | - |

As shown in Tables 1 and 2, the inventive five-layer structure featuring layer compositions described herein can strengthen stiffness-related properties, as demonstrated by creep resistance, bending stiffness, and 1% Secant Modulus, by concentrating HDPE in the inner layer as represented by Samples 1-3, and highlight toughness-related properties, as demonstrated by dart impact, Elmendorf tear, and puncture energy at break, by shifting HDPE from the inner layer to the core layer and/or the outer layer as represented by Samples 4-10. Furthermore, the inventive five-layer samples excel in overall film performance with a better compromised balance between stiffness-related and toughness-related properties that are normally repulsive to each other. Meanwhile, Sample 11 using Ziegler-Natta catalyzed LLDPE instead of mPE in the core layer also provide a cost-effective alternative in response to manufacture cost pressure with an overall mechanical profile comparable to the other inventive samples.

### Example 2

Out of the samples in Example 1, Samples 1 representing stiffness-oriented solutions and 4 representing toughness-oriented solutions were selected to compare properties with a three-layer comparative sample (Sample A). Sample A was prepared with two outer layers and a core layer between the two outer layers, having a thickness of 110 µm and a thickness ratio between each of the outer layer and the core layer of 1: 2. Structure-wise formulations (based on total weight of the film layer) and total content of high-α-olefin (HAO) (a-olefin having five or more carbon atoms) resin (based on total weight of polymer in the film sample) of Samples 1, 4, and A are shown below in Table 3. Properties were respectively measured for Sample A by methods as previously described herein and test results, together with those for Samples 1 and 4, are also depicted in Table 3.

It can be seen from Table 3 that the inventive samples can deliver advantages over the comparative sample in flexibility of fine-tuning mechanical performance to meet requirements as desired by different end-uses. Compared to the conventional three-layer structure, the inventive five-layer structure can particularly enhance stiffness-related properties without significantly compromising toughness-related properties, as evidenced by Sample 1, and vice versa, as evidenced by Sample 4. Notably, in step with the more balanced mechanical profile, a downgauging potential of about 9% and a lower HAO resin consumption can be both expected to alleviate pressure in manufacture cost reduction.

**Table 3: Structure-wise formulations (wt%), total content of HAO resin (wt%), and mechanical properties for film samples in Example 2**

| Sample No. | 1 | 4 | A |
|---|---|---|---|
| Outer | EXCEED™ 1018HA (75) ENABLE™ 20-05HH (23) POLYBATCH™ F15 (2) | EXCEED™ 1018HA (95) EXXONMOBIL ™ LDPE LD 150BW (4) POLYBATCH™ F15 (1) | EXCEED™ 1018HA (75) ENABLE™ 20-05HH (23) POLYBATCH™ F15 (2) |
| Inner | EXXONMOBIL™ HDPE HTA 002 (92) POLYWHITE™ B8750 (8) | EXCEED™ 1018HA (55) EXXONMOBIL™ HDPE HTA 002 (40) POLYWHITE™ B8750 (5) | -- |
| Core | EXCEED™ 1018HA (100) | EXCEED™ 1018HA (40) EXXONMOBIL™ HDPE HTA 002 (60) | EXCEED™ 1018HA (32) EXXONMOBIL™ HDPE HTA 002 (60) POLYWHITE™ B8750 (8) |
| HAO Resin | 59.6 | 62.5 | 65 |
| Dart Impact (g) | 535 | 629 | 668 |
| Creep Resistance (%) | 22 | 42 | 13.8 |
| Bending Stiffness (mN.mm) | 48.9 | 29.4 | 32.5 |
| 1% Secant Modulus MD (N/15 mm) | 714 | 690 | 663 |
| 1% Secant Modulus TD (N/15 mm) | 800 | 713 | 766 |
| Elmendorf Tear MD (g) | 537 | 996 | 837 |
| Puncture Energy at Break (mJ) | 8.17 | 7.84 | 9.64 |

### Example 3

Sample 7 representing toughness-oriented solutions was selected to compare properties with two comparative samples of commercially available films (Samples B and C) used in heavy duty sacks for packaging Moplen HP456J polypropylene resin (LyondellBasell Industries N.V., Netherlands) and DOWLEX™ NG 5056G polyethylene resin (The Dow Chemical Company, Midland, Michigan, USA), respectively. Properties were respectively measured for both Samples B and C by methods as previously described herein and test results, as well as film thickness, in comparison with those for Sample 7, are shown in Table 4.

**Table 4: Thickness and mechanical properties for film samples in Example 3**

| Sample No. | 7 | B | C |
|---|---|---|---|
| Thickness (µm) | 100 | 110 | 130 |
| Dart Impact (g) | 664 | 494 | 683 |
| Creep Resistance (%) | 49 | 43 | 24 |
| Bending Stiffness (mN.mm) | 27.6 | -- | -- |
| 1% Secant Modulus MD (N/15 mm) | 615 | 688 | 788 |
| 1% Secant Modulus TD (N/15 mm) | 624 | 736 | 917 |
| Elmendorf Tear MD (g) | 1118 | 789 | 1131 |
| Puncture Energy at Break (mJ) | 8.52 | 9.04 | 8.43 |

As illustrated in Table 4, the inventive Sample 7, in addition to a better balanced mechanical profile, outperformed Sample B in terms of toughness-related properties, including dart impact and Elmendorf tear, at a downgauging level of about 9%. Sample 7 even achieved a downgauging level of more than about 20% while maintaining film performance at a comparable level in contrast to Sample C.

### Example 4

Sample 11 featuring cost-effectiveness was selected to compare properties with two comparative samples (Samples D and E). Both Samples D and E were prepared with two outer layers and a core layer between the two outer layers, having a thickness of 150 µm and a thickness ratio between each of the outer layer and the core layer of 1: 2. In addition to polymer products described above, ELITE™ 5400G C₈-mLLDPE (metallocene linear low density polyethylene) resin (density: 0.916 g/cm³, MI: 1.0 g/10min) (The Dow Chemical Company, Midland, Michigan, USA) and EXXONMOBIL™ LDPE LD 165BW1 LDPE resin (density: 0.922 g/cm³, MI: 0.33 g/10min) (ExxonMobil Chemical Company, Houston, Texas, USA) are used in Sample E. Structure-wise formulations (based on total weight of the film layer) and total content of HAO resin (based on total weight of polymer in the film sample) of Samples 11, D, and E are shown below in Table 5. Properties were respectively measured for Samples D and E by methods as previously described herein and test results, together with those for Samples 11, are also depicted in Table 5.

**Table 5: Structure-wise formulations (wt%), total content of HAO resin (wt%), and mechanical properties for film samples in Example 4**

| Sample No. | 11 | D | E |
|---|---|---|---|
| Outer | EXCEED™ 1018HA (75) ENABLE™ 20-05HH (23) POLYBATCH™ F15 (2) | EXCEED™ 1018HA (83) EXXONMOBIL™ HDPE HTA 002 (15) POLYBATCH™ F15 (2) | ELITE™ 5400G C8-mLLDPE (58) EXXONMOBIL™ LLDPE LL 1001XV (40) POLYBATCH™ F15 (2) |
| Inner | EXCEED™ 1018HA (45) EXXONMOBIL™ HDPE HTA 002 (45) POLYWHITE™ B8750 (10) | -- | -- |
| Core | EXXONMOBIL™ LLDPE LL 1001XV (100) | EXXONMOBIL™ LLDPE LL 1001XV (70) EXXONMOBIL™ HDPE HTA 002 (25) POLYWHITE™ B8750 (5) | ELITE™ 5400G C8-mLLDPE (30) EXXONMOBIL™ HDPE HTA 002 (35) EXXONMOBIL™ LDPE LD 165BW1 (30) POLYWHITE™ B8750 (5) |
| HAO Resin | 33.3 | 41.5 | 46.5 |
| Dart Impact (g) | 826 | 938 | 866 |
| Creep Resistance (%) | 35 | 34 | 47 |
| Bending Stiffness (mN.mm) | 28.5 | - | - |
| 1% Secant Modulus MD (N/15 mm) | 767 | 819 | 761 |
| 1% Secant Modulus TD (N/15 mm) | 886.5 | 862 | 828 |
| Elmendorf Tear MD (g) | 1631 | 1465 | 1744 |
| Puncture Energy at Break (mJ) | -- | 6.41 | 7.48 |

It can be observed in Table 5 that, at a given thickness, the inventive Sample 11 using LLDPE instead of mPE in the core layer exceeded in balance between stiffness-related and toughness-related properties, in contrast to those achieved with the conventional three-layer structure aiming at cost-effectiveness. By virtue of a lower HAO resin content, the inventive film allows for comparable or even improved film performance at a competitive manufacture cost.

Particularly, without being bound by theory, it is believed that the inner layers in the inventive multilayer film playing the role of splitting the functionality of the core layer in the conventional three-layer structure can meet application-oriented profile requirements in a more convenient and more flexible manner than the conventional three-layer structure using the same or similar types and amounts of polymers with a well-balanced overall film performance, optionally with a gauge reduction. As a result, the present invention can serve as an efficient and cost effective alternative to the current film solutions over a broad range of end-uses.

When numerical lower limits and numerical upper limits are listed herein, ranges from any lower limit to any upper limit are contemplated. As is apparent from the foregoing general description and the specific embodiments, while forms of the invention have been illustrated and described, various modifications can be made without departing from the scope of the claims. Accordingly, it is not intended that the invention be limited thereby.

## Claims

1. A heavy duty sack comprising a multilayer film, comprising:
(a) two outer layers, wherein at least one of the outer layer comprises a first polyethylene having a density of 0.910 to 0.940 g/cm³, a melt index (MI), I_{2.16}, of 0.1 to 15 g/10 min, a molecular weight distribution (MWD) of 1.5 to 5.5, and a melt index ratio (MIR), I_{21.6}/I_{2.16}, of 10 to 25;
(b) a core layer between the two outer layers, the core layer comprising a second polyethylene having a density of 0.910 to 0.940 g/cm³, an MI, I_{2.16}, of 0.1 to 15 g/10 min, an MWD of 1.5 to 5.5, and an MIR, I_{21.6}/I_{2.16}, of 10 to 25; and
(c) two inner layers each between the core layer and each outer layer, wherein at least one of the inner layers comprises a third polyethylene having a density of at least 0.940 g/cm³;
wherein the multilayer film has: (i) a dart impact (ASTM D1709) of at least 500 g; (ii) a creep resistance (determined according to the method provided in the examples) of no more than 50%, and (iii) a thickness of 80 to 150 µm.

2. The heavy duty sack of claim 1, wherein the multilayer film further has at least one of the following properties: (i) a bending stiffness factor (DIN 53121) of at least 25 mN.mm; (ii) a 1% Secant Modulus (ASTM D882) of at least 550 N/15 mm in Machine Direction (MD) and of at least 550 N/15 mm in Transverse Direction (TD); (iii) an Elmendorf tear (ASTM D1922-06a) of at least 350 g in MD; and (iv) a puncture energy at break (CEN 14477) of at least 7.2 mJ.

3. The heavy duty sack of claim 1 or 2, wherein the first polyethylene is present in an amount of at least 70 wt%, based on total weight of the outer layer.

4. The heavy duty sack of any of claims 1 to 3, wherein the at least one of the outer layers further comprises a fourth polyethylene having a density of 0.910 to 0.945 g/cm³, an MI, I_{2.16}, of 0.1 to 15 g/10 min, an MWD of 2.5 to 5.5, and an MIR, I_{21.6}/I_{2.16}, of 25 to 100.

5. The heavy duty sack of any of claims 1 to 4, wherein the second polyethylene is present in an amount of at least 35 wt%, based on total weight of the core layer.

6. The heavy duty sack of any of claims 1 to 5, wherein the core layer further comprises a fifth polyethylene having a density of at least 0.940 g/cm³.

7. The heavy duty sack of any of claims 1 to 6, wherein the third polyethylene is present in an amount of at least 30 wt%, based on total weight of the inner layer.

8. The heavy duty sack of any of claims 1 to 7, wherein the at least one of the inner layers further comprises a sixth polyethylene having a density of 0.910 to 0.940 g/cm³, an MI, I_{2.16}, of 0.1 to 15 g/10 min, an MWD of 1.5 to 5.5, and an MIR, I_{21.6}/I_{2.16}, of 10 to 25.

9. The heavy duty sack of any of claims 1 to 8, wherein the two outer layers have in a total thickness of at most 50% of the total thickness of the multilayer film.

10. The heavy duty sack of claim 1, wherein the multi-layer film is a five-layer film, and:
(a) the two outer layers each comprise: (i) at least 70 wt% of the first polyethylene, based on total weight of the outer layer; and (ii) a fourth polyethylene having a density of 0.910 to 0.945 g/cm³, an MI, I_{2.16}, of 0.1 to 15 g/10 min, an MWD of 2.5 to 5.5, and an MIR, I_{21.6}/I_{2.16}, of 25 to 100;
(b) the core layer comprises 100 wt% of the second polyethylene, based on total weight of the core layer; and
(c) each of the two inner layers comprises at least 90 wt% of the third polyethylene, based on total weight of the inner layer;
and the multilayer film has a creep resistance (determined according to the method provided in the examples) of no more than 30%.

11. The heavy duty sack of claim 10, wherein the five-layer film further has at least one of the following properties: (i) a bending stiffness factor (DIN 53121) of at least 35 mN.mm; (ii) a 1% Secant Modulus (ASTM D882) of at least 700 N/15 mm in MD and of at least 750 N/15 mm in TD; (iii) an Elmendorf tear (ASTM D1922-06a) of at least 350 g in MD; and (iv) a puncture energy (CEN 14477) at break of at least 7.2 mJ.

12. The heavy duty sack of claim 1, wherein the multi-layer film is a five-layer film, and:
(a) the two outer layers each comprise: (i) at least 70 wt% of the first polyethylene, based on total weight of the outer layer; and (ii) a fourth polyethylene having a density of 0.910 to 0.945 g/cm³, an MI, I_{2.16}, of 0.1 to 15 g/10 min, an MWD of 2.5 to 5.5, and an MIR, I_{21.6}/I_{2.16}, of 25 to 100;
(b) the core layer comprises at least 35 wt% of the second polyethylene, based on total weight of the core layer; and
(c) each of the two inner layers comprises: (i) at least 30 wt% of the third polyethylene, based on total weight of the inner layer; and (ii) a sixth polyethylene having a density of 0.910 to 0.940 g/cm³, an MI, I_{2.16}, of 0.1 to 15 g/10 min, an MWD of 1.5 to 5.5, and an MIR, I_{21.6}/I_{2.16}, of 10 to 25;
and the multilayer film has a dart impact (ASTM D1709) of at least 580 g.

13. The heavy duty sack of claim 12, wherein the five-layer film further has at least one of the following properties: (i) a bending stiffness factor (DIN 53121) of at least 25 mN.mm; (ii) a 1% Secant Modulus (ASTM D882) of at least 550 N/15 mm in MD and of at least 550 N/15 mm in TD; (iii) an Elmendorf tear (ASTM D1922-06a) of at least 600 g in MD; and (iv) a puncture energy (CEN 14477) at break of at least 7.7 mJ.

14. The heavy duty sack of any of claims 10 to 13, wherein the two outer layers have in a total thickness of at most 50% of the total thickness of the five-layer film and the two inner layers have a total thickness of at most 60% of the total thickness of the five-layer film.

15. A method for making a multilayer film, comprising the steps of:
(a) preparing two outer layers, wherein at least one of the outer layer comprises a first polyethylene having a density of 0.910 to 0.940 g/cm³, an MI, I_{2.16}, of 0.1 to 15 g/10 min, an MWD of 1.5 to 5.5, and an MIR, I_{21.6}/I_{2.16}, of 10 to 25;
(b) preparing a core layer between the two outer layers, the core layer comprising a second polyethylene having a density of 0.910 to 0.940 g/cm³, an MI, I_{2.16}, of 0.1 to 15 g/10 min, an MWD of 1.5 to 5.5, and an MIR, I_{21.6}/I_{2.16}, of t 10 to 25;
(c) preparing two inner layers each between the core layer and each outer layer, wherein at least one of the inner layers comprises a third polyethylene having a density of at least 0.940 g/cm³; and
(d) forming a film comprising the layers in steps (a) to (c);
wherein the multilayer film has: (i) a dart impact (ASTM D1709) of at least 500 g; (ii) a creep resistance (determined according to the method provided in the examples) of no more than 50%; and a thickness of 80 to 150 µm.

## Patentansprüche

1. Schwerlastsack, der eine Mehrschichtfolie umfasst, die
(a) zwei Außenschichten, wobei mindestens eine der Außenschichten erstes Polyethylen mit einer Dichte von 0,910 bis 0,940 g/cm³, einem Schmelzindex (MI), I_{2,16}, von 0,1 bis 15 g/10 min, einer Molekulargewichtsverteilung (MWD) von 1,5 bis 5,5, und einem Schmelzindexverhältnis (MIR), I_{21,6}/I_{2,16}, von 10 bis 25 umfasst,
(b) eine Kernschicht zwischen den beiden Außenschichten, wobei die Kernschicht zweites Polyethylen mit einer Dichte von 0,910 bis 0,940 g/cm³, einem MI, I_{2,16}, von 0,1 bis 15 g/10 min, einer MWD von 1,5 bis 5,5 und einem MIR, I_{21,6}/I_{2,16}, von 10 bis 25 umfasst, und
(c) zwei Innenschichten jeweils zwischen der Kernschicht und jeder Außenschicht umfasst, wobei mindestens eine der Innenschichten drittes Polyethylen mit einer Dichte von mindestens 0,940 g/cm³ umfasst,
wobei die Mehrschichtfolie aufweist:
(i) eine Schlagzähigkeit (ASTM D1709) von mindestens 500 g;
(ii) eine Kriechfestigkeit (ermittelt nach dem in den Beispielen bereitgestellten Verfahren) von nicht mehr als 50 %, und
(iii) eine Dicke von 80 bis 150 µm.

2. Schwerlastsack nach Anspruch 1, bei dem die Mehrschichtfolie des Weiteren mindestens eine der folgenden Eigenschaften aufweist: (i) einen Biegesteifigkeitsfaktor (DIN 53121) von mindestens 25 mN·mm, (ii) einen 1 % Sekantenmodul (ASTM D882) von mindestens 550 N/15 mm in Maschinenrichtung (MD) und von mindestens 550 N/15 mm in Querrichtung (TD), (iii) eine Elmendorf-Reißfestigkeit (ASTM D1922-06a) von mindestens 350 g in MD, und (iv) eine Durchstoßbruchenergie (CEN 14477) von mindestens 7,2 mJ.

3. Schwerlastsack nach Anspruch 1 oder 2, bei dem das erste Polyethylen in einer Menge von mindestens 70 Gew.% vorhanden ist, bezogen auf das Gesamtgewicht der Außenschicht.

4. Schwerlastsack nach einem der Ansprüche 1 bis 3, bei dem die mindestens eine der Außenschichten des Weiteren viertes Polyethylen mit einer Dichte von 0,910 bis 0,945 g/cm³, einem MI, I_{2,16}, von 0,1 bis 15 g/10 min, einer MWD von 2,5 bis 5,5, und einem MIR, I_{21,6}/I_{2,16}, von 25 bis 100 umfasst.

5. Schwerlastsack nach einem der Ansprüche 1 bis 4, bei dem das zweite Polyethylen in einer Menge von mindestens 35 Gew.% vorhanden ist, bezogen auf das Gesamtgewicht der Kernschicht.

6. Schwerlastsack nach einem der Ansprüche 1 bis 5, bei dem die Kernschicht des Weiteren fünftes Polyethylen mit einer Dichte von mindestens 0,940 g/cm³ umfasst.

7. Schwerlastsack nach einem der Ansprüche 1 bis 6, bei dem das dritte Polyethylen in einer Menge von mindestens 30 Gew.% vorhanden ist, bezogen auf das Gesamtgewicht der Innenschicht.

8. Schwerlastsack nach einem der Ansprüche 1 bis 7, bei dem die mindestens eine der Innenschichten des Weiteren sechstes Polyethylen mit einer Dichte von 0,910 bis 0,940 g/cm³, einem MI, I_{2,16} von 0,1 bis 15 g/10 min, einer MWD von 1,5 bis 5,5, und einem MIR, I_{21,6}/I_{2,16}, von 10 bis 25 umfasst.

9. Schwerlastsack nach einem der Ansprüche 1 bis 8, bei dem die beiden Außenschichten eine Gesamtdicke von höchstens 50 % der Gesamtdicke der Mehrschichtfolie aufweisen.

10. Schwerlastsack nach Anspruch 1, bei dem die Mehrschichtfolie eine Fünfschichtfolie ist, und
(a) die beiden Außenschichten jeweils umfassen: (i) mindestens 70 Gew.% des ersten Polyethylens, bezogen auf das Gesamtgewicht der Außenschicht, und (ii) viertes Polyethylen mit einer Dichte von 0,910 bis 0,945 g/cm³, einem MI, I_{2,16}, von 0,1 bis 15 g/10 min, einer MWD von 2, 5 bis 5,5, und einem MIR, I_{21,6}/I_{2,16}, von 25 bis 100,
(b) wobei die Kernschicht 100 Gew.% des zweiten Polyethylens umfasst, bezogen auf das Gesamtgewicht der Kernschicht, und
(c) jede der beiden Innenschichten mindestens 90 Gew.% des dritten Polyethylens umfasst, bezogen auf das Gesamtgewicht der Innenschicht,
und wobei die Mehrschichtfolie eine Kriechfestigkeit (bestimmt gemäß dem in den Beispielen bereitgestellten Verfahren) von nicht mehr als 30 % aufweist.

11. Schwerlastsack nach Anspruch 10, bei dem die Fünfschichtfolie des Weiteren mindestens eine der folgenden Eigenschaften aufweist: (i) einen Biegesteifigkeitsfaktor (DIN 53121) von mindestens 35 mN·mm, (ii) einen 1 % Sekantenmodul (ASTM D882) von mindestens 700 N/15 mm in MD und von mindestens 750 N/15 mm in TD, (iii) eine Elmendorf-Reißfestigkeit (ASTM D1922-06a) von mindestens 350 g in MD, und (iv) eine Durchstoßbruchenergie (CEN 14477) von mindestens 7,2 mJ.

12. Schwerlastsack nach Anspruch 1, bei dem die Mehrschichtfolie eine Fünfschichtfolie ist, und
(a) die beiden Außenschichten jeweils umfassen: (i) mindestens 70 Gew.% des ersten Polyethylens, bezogen auf das Gesamtgewicht der Außenschicht, und (ii) viertes Polyethylen mit einer Dichte von 0,910 bis 0,945 g/cm³, einem MI, I_{2,16}, von 0,1 bis 15 g/10 min, einer MWD von 2, 5 bis 5,5, und einem MIR, I_{21,6}/I_{2,16}, von 25 bis 100,
(b) wobei die Kernschicht mindestens 35 Gew.% des zweiten Polyethylens umfasst, bezogen auf das Gesamtgewicht der Kernschicht, und
(c) jede der beiden Innenschichten umfasst: (i) mindestens 30 Gew.% des dritten Polyethylens, bezogen auf das Gesamtgewicht der Innenschicht, und (ii) sechstes Polyethylen mit einer Dichte von 0,910 bis 0,940 g/cm³, einem MI, I_{2,16}, von 0,1 bis 15 g/10 min, einer MWD von 1,5 bis 5,5, und einem MIR, I_{21,6}/I_{2,16}, von 10 bis 25,
und die Mehrschichtfolie einen Schlagzähigkeitswert (ASTM D1709) von mindestens 580 g aufweist.

13. Schwerlastsack nach Anspruch 12, bei dem die Fünfschichtfolie des Weiteren mindestens eine der folgenden Eigenschaften aufweist: (i) einen Biegesteifigkeitsfaktor (DIN 53121) von mindestens 25 mN·mm, (ii) einen 1 % Sekantenmodul (ASTM D882) von mindestens 550 N/15 mm in MD und von mindestens 550 N/15 mm in TD, (iii) eine Elmendorf-Reißfestigkeit (ASTM D1922-06a) von mindestens 600 g in MD, und (iv) eine Durchstoßbruchenergie (CEN 14477) von mindestens 7,7 mJ.

14. Schwerlastsack nach einem der Ansprüche 10 bis 13, bei dem die beiden Außenschichten eine Gesamtdicke von höchstens 50 % der Gesamtdicke der Fünfschichtfolie aufweisen, und die beiden Innenschichten eine Gesamtdicke von höchstens 60 % der Gesamtdicke der Fünfschichtfolie aufweisen.

15. Verfahren zum Herstellen einer mehrschichtigen Folie, bei dem in den folgenden Schritten
(a) zwei Außenschichten hergestellt werden, wobei mindestens eine der Außenschichten erstes Polyethylen mit einer Dichte von 0,910 bis 0,940 g/cm³, einem MI, I_{2,16}, von 0,1 bis 15 g/10 min, einer MWD von 1,5 bis 5,5 und einem MIR, I_{21,6}/I_{2,16}, von 10 bis 25 umfasst, und
(b) eine Kernschicht zwischen den beiden Außenschichten hergestellt wird, wobei die Kernschicht zweites Polyethylen mit einer Dichte von 0,910 bis 0, 940 g/cm³, einem MI, I_{2,16}, von 0,1 bis 15 g/10 min, einer MWD von 1,5 bis 5,5 und einem MIR, I_{21,6}/I_{2,16}, von 10 bis 25 umfasst,
(c) zwei Innenschichten jeweils zwischen der Kernschicht und jeder Außenschicht hergestellt werden, wobei mindestens eine der Innenschichten drittes Polyethylen mit einer Dichte von mindestens 0,940 g/cm³ umfasst, und
(d) Folie gebildet wird, welche die Schichten der Schritte (a) bis (c) umfasst,
wobei die Mehrschichtfolie aufweist:
(i) eine Schlagzähigkeit (ASTM D1709) von mindestens 500 g;
(ii) eine Kriechfestigkeit (ermittelt nach dem in den Beispielen bereitgestellten Verfahren) von nicht mehr als 50 %, und
(iii) eine Dicke von 80 bis 150 µm.

## Revendications

1. Sac de grande résistance comprenant un film multicouche, comprenant :
(a) deux couches externes, au moins l'une des couches externes comprenant un premier polyéthylène possédant une densité de 0,910 à 0,940 g/cm³, un indice de fusion (MI), I_{2,16}, de 0,1 à 15 g/10 min, une distribution de poids moléculaire (MWD) de 1,5 à 5,5, et un rapport d'indices de fusion (MIR), I_{21,6}/I_{2,16}, de 10 à 25 ;
(b) une couche noyau entre les deux couches externes, la couche noyau comprenant un deuxième polyéthylène possédant une densité de 0,910 à 0,940 g/cm³, un MI, I_{2,16}, de 0,1 à 15 g/10 min, une MWD de 1,5 à 5,5, et un MIR, I_{21,6}/I_{2,16}, de 10 à 25 ; et
(c) deux couches internes, chacune entre la couche noyau et chaque couche externe, au moins l'une des couches internes comprenant un troisième polyéthylène possédant une densité d'au moins 0,940 g/cm³;
le film multicouche possédant : (i) une résistance au choc au mouton (norme ASTM D1709) d'au moins 500 g ; (ii) une résistance au fluage (déterminée selon le procédé fourni dans les exemples) non supérieure à 50 %, et (iii) une épaisseur de 80 à 150 µm.

2. Sac de grande résistance selon la revendication 1, le film multicouche possédant en outre au moins l'une des propriétés suivantes : (i) un facteur de rigidité en flexion (norme DIN 53121) d'au moins 25 mN.mm ; (ii) un module sécant à 1 % (norme ASTM D882) d'au moins 550 N/15 mm dans le sens machine (MD) et d'au moins 550 N/15 mm dans le sens transversal (TD) ; (iii) une résistance à la déchirure Elmendorf (norme ASTM D1922-06a) d'au moins 350 g en MD ; et (iv) une énergie de perforation à la rupture (norme CEN 14477) d'au moins 7,2 mJ.

3. Sac de grande résistance selon la revendication 1 ou 2, le premier polyéthylène étant présent en une quantité d'au moins 70 % en poids, sur la base du poids total de la couche externe.

4. Sac de grande résistance selon l'une quelconque des revendications 1 à 3, l'au moins une parmi les couches externes comprenant en outre un quatrième polyéthylène possédant une densité de 0,910 à 0,945 g/cm³, un MI, I_{2,16}, de 0,1 à 15 g/10 min, une MWD de 2,5 à 5,5, et un MIR, I_{21,6}/I_{2,16}, de 25 à 100.

5. Sac de grande résistance selon l'une quelconque des revendications 1 à 4, le deuxième polyéthylène étant présent en une quantité d'au moins 35 % en poids, sur la base du poids total de la couche noyau.

6. Sac de grande résistance selon l'une quelconque des revendications 1 à 5, la couche noyau comprenant en outre un cinquième polyéthylène possédant une densité d'au moins 0,940 g/cm³.

7. Sac de grande résistance selon l'une quelconque des revendications 1 à 6, le troisième polyéthylène étant présent en une quantité d'au moins 30 % en poids, sur la base du poids total de la couche interne.

8. Sac de grande résistance selon l'une quelconque des revendications 1 à 7, l'au moins une parmi les couches internes comprenant en outre un sixième polyéthylène possédant une densité de 0,910 à 0,940 g/cm³, un MI, I_{2,16}, de 0,1 à 15 g/10 min, une MWD de 1,5 à 5,5, et un MIR, I_{21,6}/I_{2,16}, de 10 à 25.

9. Sac de grande résistance selon l'une quelconque des revendications 1 à 8, les deux couches externes possédant une épaisseur totale d'au plus 50 % de l'épaisseur totale du film multicouche.

10. Sac de grande résistance selon la revendication 1, le film multicouche étant un film à cinq couches, et :
(a) les deux couches externes comprenant chacune : (i) au moins 70 % en poids du premier polyéthylène, sur la base du poids total de la couche externe ; et (ii) un quatrième polyéthylène possédant une densité de 0,910 à 0,945 g/cm³, un MI, I_{2,16}, de 0,1 à 15 g/10 min, une MWD de 2,5 à 5,5, et un MIR, I_{21,6}/I_{2,16}, de 25 à 100 ;
(b) la couche noyau comprenant 100 % en poids du deuxième polyéthylène, sur la base du poids total de la couche noyau ; et
(c) chacune des deux couches internes comprenant au moins 90 % en poids du troisième polyéthylène, sur la base du poids total de la couche interne ;
et le film multicouche possédant une résistance au fluage (déterminée conformément au procédé fourni dans les exemples) non supérieure à 30 %.

11. Sac de grande résistance selon la revendication 10, le film à cinq couches possédant en outre au moins l'une des propriétés suivantes : (i) un facteur de rigidité en flexion (norme DIN 53121) d'au moins 35 mN.mm ; (ii) un module sécant à 1 % (norme ASTM D882) d'au moins 700 N/15 mm en MD et d'au moins 750 N/15 mm en TD ; (iii) une résistance à la déchirure Elmendorf (norme ASTM D1922-06a) d'au moins 350 g en MD ; et (iv) une énergie de perforation (norme CEN 14477) à la rupture d'au moins 7,2 mJ.

12. Sac de grande résistance selon la revendication 1, le film multicouche étant un film à cinq couches, et :
(a) les deux couches externes comprenant chacune : (i) au moins 70 % en poids du premier polyéthylène, sur la base du poids total de la couche externe ; et (ii) un quatrième polyéthylène possédant une densité de 0,910 à 0,945 g/cm³, un MI, I_{2,16}, de 0,1 à 15 g/10 min, une MWD de 2,5 à 5,5, et un MIR, I_{21,6}/I_{2,16}, de 25 à 100 ;
(b) la couche noyau comprenant au moins 35 % en poids du deuxième polyéthylène, sur la base du poids total de la couche noyau ; et
(c) chacune des deux couches internes comprenant : (i) au moins 30 % en poids du troisième polyéthylène, sur la base du poids total de la couche interne ; et (ii) un sixième polyéthylène possédant une densité de 0,910 à 0,940 g/cm³, un MI, I_{2,16}, de 0,1 à 15 g/10 min, une MWD de 1,5 à 5,5, et un MIR, I_{21,6}/I_{2,16}, de 10 à 25 ;
et le film multicouche possédant une résistance au choc au mouton (norme ASTM D1709) d'au moins 580 g.

13. Sac de grande résistance selon la revendication 12, le film à cinq couches possédant en outre au moins l'une des propriétés suivantes : (i) un facteur de rigidité en flexion (norme DIN 53121) d'au moins 25 mN.mm ; (ii) un module sécant à 1 % (norme ASTM D882) d'au moins 550 N/15 mm en MD et d'au moins 550 N/15 mm en TD ; (iii) une résistance à la déchirure Elmendorf (norme ASTM D1922-06a) d'au moins 600 g en MD ; et (iv) une énergie de perforation (norme CEN 14477) à la rupture d'au moins 7,7 mJ.

14. Sac de grande résistance selon l'une quelconque des revendications 10 à 13, les deux couches externes possédant une épaisseur totale d'au plus 50 % de l'épaisseur totale du film à cinq couches et les deux couches internes possédant une épaisseur totale d'au plus 60 % de l'épaisseur totale du film à cinq couches.

15. Procédé pour la fabrication d'un film multicouche, comprenant les étapes de :
(a) préparation de deux couches externes, au moins l'une des couches externes comprenant un premier polyéthylène possédant une densité de 0,910 à 0,940 g/cm³, un MI, I_{2,16}, de 0,1 à 15 g/10 min, une MWD de 1,5 à 5,5, et un MIR, I_{21,6}/I_{2,16}, de 10 à 25 ;
(b) préparation d'une couche noyau entre les deux couches externes, la couche noyau comprenant un deuxième polyéthylène possédant une densité de 0,910 à 0,940 g/cm³, un MI, I_{2,16}, de 0,1 à 15 g/10 min, une MWD de 1,5 à 5,5, et un MIR, I_{21,6}/I_{2,16}, de 10 à 25 ;
(c) préparation de deux couches internes chacune entre la couche noyau et chaque couche externe, au moins l'une des couches internes comprenant un troisième polyéthylène possédant une densité d'au moins 0,940 g/cm³ ; et
(d) formation d'un film comprenant les couches dans les étapes (a) à (c) ;
le film multicouche possédant : (i) une résistance au choc au mouton (norme ASTM D1709) d'au moins 500 g ; (ii) une résistance au fluage (déterminée selon le procédé fourni dans les exemples) non supérieure à 50 % ; et une épaisseur de 80 à 150 µm.
